# EUROPEAN PATENT APPLICATION

(11) **EP 4 497 590 A1**
(43) Date of publication of application: **29.01.2025**
(21) Application number: 23187984.2
(22) Date of filing: 27.07.2023
(51) Int. Cl.: B32B 7/023, B32B 7/027, B32B 7/12, B32B 27/08, B32B 27/30, B32B 27/32, C08J 5/18, C08L 23/04

(54) **MULTILAYER FILM**

(71) Applicant: Flexopack S.A., 194 00 Koropi (GR)
(72) Inventor: GKINOSATIS, Dimitris, 19400 Koropi Attica (GR)
(74) Representative: Isarpatent

(57) **Abstract**

The current invention relates to a multilayer film. The multilayer film is characterized by a combination of desirable properties, such as excellent thermoformability, good optical properties, excellent sealability, puncture resistance and recycling capacity.

## Description

The present invention refers to a multilayer film characterized by a combination of desirable properties, such as excellent thermoformability, good optical properties, excellent sealability, puncture resistance and recycling capacity. The invention further is directed to a method of producing said film. The invention is further directed to the use of said film for packaging applications in particular for food products and to the use of said film for deep-drawing packaging applications. The invention is further directed to a deep-drawing package comprising said film.

Generally, the packaging of food items by means of a thermoforming machine comprises the following steps
1. Thermoforming a suitable film (often called "bottom" or "deep drawable" film) with the use of temperature, vacuum and/or pressure or plug.
2. Putting the product to be packed into the formed "pockets" of step 1.
3. Vacuumizing the end pack at a different(sealing) station and sealing the thermoformed material to a "top" lidding film.

The critical physical properties that are considered important by the people skilled in the art for the films of such an application are
1. For the deep drawable film it is important to be able to thermoform efficiently under the conditions of the different thermoforming machines
2. Excellent optics are also important for the nice presentation of the packs in supermarkets and other display rooms.
3. Mechanical abuse properties and puncture resistance are also important properties in order to minimize the % rejects during the shelf life of the product.
4. Oxygen barrier properties are important in order to minimize the oxygen ingress that are detrimental to the long shelf life of foods that are often thermoformed e.g. fresh meat, processed meat, cheese and others.

In some cases, where the food is stored in frozen conditions for example, there is the possibility to use a non-gas barrier film. The other characteristics remain the same.

Packaging films with the above properties are well known in the art.

A typical patent application representing films that are often used in prior art is CA 2 122 283 A1.

In general, the films used in the prior art comprise such polymers like polyamides that are considered a very good solution at they combine excellent thermoformability, puncture and mechanical abuse and optics.

While the prior art films offer a suitable combination of such properties, facing the new trends that they require easy recyclability of films, they are considered not optimum. There are recyclability platforms e.g., OPRL (on-pack recycling label) that do not accept such films in their recyclability streams.

It is an object of the present invention to provide a multilayer film which has equally good or even better properties than traditional films as described above), in particular with regard to optical properties, thermoformability, mechanical properties and oxygen barrier properties, which has improved recyclability and can be easily recycled compared to known film, which can in particular be recycled in a PP recycling stream.

### SUMMARY OF THE INVENTION

In a first aspect, the present invention relates to a multilayer film comprising an outer layer, an oxygen barrier layer, and an inner sealing layer, wherein the oxygen barrier layer is located between the outer layer and inner sealing layer, wherein the oxygen barrier layer comprises an ethylene vinyl ester copolymer (EVOH).

The multilayer film comprises at least 90% per weight polypropylene or polybutene polymers or copolymers, not more than 8% per weight EVOH, and at least 25% per weight random propylene-ethylene copolymer having a melting point in the range from 135 °C to 148 °C, based on the total weight of the film. Further the multilayer film does not comprise any polyamide, polyester, polyvinyl chloride (PVC), or polyvinylidene chloride (PVDC).

According to a second aspect, the multilayer film according to the first aspect comprises a homopolymer polypropylene, preferably wherein the multilayer film comprises a homopolymer polypropylene in the outer layer.

According to a third aspect, the homopolymer polypropylene, in the multilayer film according to the second aspect is a homopolymer polypropylene produced by either Ziegler-Natta- or metallocene catalysts and having a melting point of at least 150 °C, more preferably the homopolymer polypropylene has a melting point in the range from 150 °C to 170 °C and further preferably a melt flow rate in the range from 0.2 to 20 grams as measured by ASTM D1238 (230 °C, 10 minutes).

According to a fourth aspect, the multilayer film according to any one of the preceding aspects comprises in the outer layer a random propylene-ethylene copolymer, preferably, the random propylene-ethylene copolymer has a melting point in the range from 135 °C to 148 °C and further preferably a melt flow rate in the range from 0.2 to 20 grams as measured by ASTM D1238 (230 °C, 10 minutes).

According to a fifth aspect, the multilayer film according to any of the preceding aspects comprises in the outer layer a propylene ethylene copolymer with less than 10% per weight ethylene and a melting point of less than 130 °C, more preferably less than 125 °C, even more preferably less than 120 °C.

According to a sixth aspect, the multilayer film according to any of the preceding aspects comprises at least one polypropylene polymer, preferably a blend of different polypropylene polymers, in the inner heat sealing layer, preferably the melting point of the polypropylene material in the inner heat sealing layer is at least 10 °C lower than the melting point of any polypropylene material used in any other layer of the multilayer film.

According to a seventh aspect, the multilayer film according to the sixth aspect comprises a propylene ethylene copolymer in the inner heat sealing layer, preferably the propylene ethylene copolymer has a melting point of less than 135°C, preferably less than 130 °C, more preferably a melting point of less than 125 °C, even more preferably a melting point of less than 120 °C.

According to an eighth aspect, the multilayer film according to the sixth or seventh aspect, wherein the multilayer film comprises at least 10% of the propylene ethylene copolymer, based on the total weight of the multilayer film.

According to a ninth aspect, the multilayer film according to any of the preceding aspects, wherein the inner sealing layer (further) comprises a propylene butene copolymer, preferably said copolymer has a melting point of less than 135 °C, preferably less than 130 °C, more preferably a melting point of less than 125 °C, even more preferably a melting point of less than 120 °C.

According to a tenth aspect, the multilayer film according to any one of the preceding aspects, wherein the inner sealing layer (further) comprises a propylene-ethylene-butene copolymer, preferably the sum of the ethylene and butene content in the propylene-ethylene-butene copolymer is less than 10% by weight based on the total weight of the copolymer.

According to an eleventh aspect the multilayer film according to any one of the preceding aspects, comprising at least one intermediate layer between the outer layer and the oxygen barrier layer and/or between the oxygen barrier layer and the inner heat sealing layer, preferably the multilayer film comprises the following layer structure: outer layer/intermediate layer 1/barrier layer/intermediate layer 2/inner sealing layer.

According to a twelfth aspect the multilayer film according to any of the first to tenth aspect comprising the following layer structure: outer layer/intermediate layer 1/intermediate layer 2/intermediate layer 3/barrier layer/intermediate layer 4/intermediate layer 5/intermediate layer 6/inner sealing layer, or the following layer structure: outer layer/intermediate layer 1/intermediate layer 2/barrier layer/intermediate layer 3/intermediate layer 4/inner sealing layer.

According to a thirteenth aspect the multilayer film according to any of the preceding aspects has a haze of less than 10% measured according to ASTM D 1003.

According to a fourteenth aspect the multilayer film according to any of the preceding aspects has a gloss of at least 100GU (45° angle) measured according to ASTM D2457.

In a fifteenth aspect the present invention relates to a use of the multilayer film according to any of the preceding aspects for packaging applications, in particular for packaging food.

In a sixteenth aspect the present invention relates to a use of the multilayer film according to anyone of the first to fourteenth aspect, as top film and/or bottom film in deep-drawing packaging.

In a seventeenths aspect the present invention relates to a deep-drawing package comprising as a top film and/or as a bottom film a multilayer film according to any one of the first to fourteenth aspect.

### Definitions:

In this application the following definitions are used:
The term "film" refers to a flat or tubular flexible structure of thermoplastic material.

The term "heat shrinkable" refers to a film that shrinks at least 10% in at least one of the longitudinal and transverse directions when heated at 90°C for 4 seconds. The shrinkability is measured according to ASTM 2732.

The phrase "longitudinal direction" or "machine direction" herein abbreviated "MD" refers to a direction along the length of the film.

The phrase "outer layer" refers to the film layer which comes in immediate contact with the outside environment (atmosphere).

The phrase "inner layer" refers to the film layer that comes in direct contact with the product packed. This is also called "sealing layer" as this layer must be hermetically sealed in order to protect the product from ingress of air.

The phrase "intermediate layer" refers to any layer of the film that is neither outer nor inner layer. A film may comprise more than one intermediate layers.

As used herein, the term "homopolymer" refers to a polymer resulting from polymerization of a single monomer.

As used herein, the term "copolymer" refers to a polymer resulting from polymerization of at least two different polymers.

As used herein, the term "polymer" includes both above types.

As used herein the term "polyethylene" identifies polymers consisting essentially of the ethylene repeating unit. The ones that have a density more than 0.940 are called high density polyethylene (HDPE), the ones that are have less than 0.940 are low density polyethylene (LDPE).

As used herein the phrase "ethylene alpha olefin copolymer" refers to polymers like linear low-density polyethylene (LLDPE), medium density polyethylene (MDPE), very low-density polyethylene (VLDPE), ultra-low density polyethylene (ULDPE), metallocene catalyzed polymers and polyethylene plastomers and elastomers.

In these cases, the alpha olefin can be propene, butene, hexene, octene etc. as known in the art.

As used herein the term "homogeneous ethylene alpha olefin copolymers" refer to ethylene alpha olefin copolymers having a molecular weight distribution less than 2.7 as measured by GPC. Typical examples of these polymers are AFFINITY from DOW or Exact from Exxon.

As used herein the phrase "styrene polymers" refers to styrene homopolymer such as polystyrene and to styrene copolymers such as styrene-butadiene copolymers, styrene-butadiene-styrene copolymers, styrene-isoprene-styrene copolymers, styrene-ethylene-butadiene-styrene copolymers, ethylene-styrene copolymers and the like.

As used herein the phrase "ethylene methacrylate copolymers" refers to copolymers of ethylene and methacrylate monomer. The monomer content is less than 40%.

As used herein the phrase "ethylene vinyl acetate copolymer" refer to copolymers of ethylene and vinyl acetate. EVA is the usual abbreviation for ethylene vinyl acetate copolymers.

As used herein, the term EVOH refers to saponified products of ethylene vinyl ester copolymers. The ethylene content is typically in the range of 25 to 50%.

As used herein the term PVDC refers to a vinylidene chloride copolymer wherein a major amount of the copolymer comprises vinylidene chloride and a minor amount of the copolymer comprises one or more monomers such as vinyl chloride and/or alkyl acrylates and methacrylates.

As used herein the term polyamide refers to homopolymers and copolymers.

As used herein the term "ionomer" refers to ethylene-acid copolymers which have been neutralized by metals such as sodium, zinc, lithium or others.

The acid used is usually methacrylic or acrylic acid.

As used herein the term "polybutylene" refers to butene-1 homopolymers and copolymers. Useful copolymers comprise ethylene mer units. Ethylene content should be generally less than 50%.

As used herein the term "glycol modified polyester" encompasses polyesters such as PETG, PCTG, spiroglycol modified polyethylene terephthalate and the like.

As used herein the term "polypropylene" refers to homopolymers, copolymers and terpolymers of propylene.

A suitable material for the invention is homopolymer PP.

A new more advanced category of homopolymer PP is the one produced by the use of metallocene catalysts, such as Lumicene MR2002 from Total Petrochemicals.

Random copolymer of propylene and ethylene is a polymer where the ethylene content is often in the range of 0.5 to 10%, more often 1 to 5%. The ethylene mers are distributed in a random way among the propylene mers.

Another class of polypropylene copolymers are the propylene-ethylene-butene "terpolymers". Such polymers well known in the art are the Adsyl from Lyondell Vasell.

Still another class of polypropylene polymers useful for the invention are the propylene-butene copolymers.

Another class of polymers useful for the invention are propylene and ethylene copolymers with melting points less than 130C, more preferably less than 125C, more preferably less than 120C. Such materials are Vistamaxx from Exxon and Versify from Dow.

Another class of polymers useful for the invention are heterophasic impact copolymers, such as Inspire 137.02 from Braskem. Such materials are elastomer modified homopolymers of PP and have much higher impact resistance at frozen conditions compared to unmodified homopolymers.

Other materials useful for the present invention are syndiotactic and/or atactic PPs.

Polybutene polymers are also possible to be used as they are highly compatible with PP and can be recycled in PP recycling stream. Such materials may be polybutene homopolymer and/or butene-ethylene or butene-propylene copolymers.

All measurement methods mentioned herein are readily available for the skilled person. For example, they can be obtained from the American National Standards Institute at:

### www.webstore.ansi.org

All percentages used are per weight unless stated otherwise.

### DETAILED DESCRIPTION OF THE INVENTION

In a first aspect, the present invention relates to a multilayer film comprising an outer layer, an oxygen barrier layer, and an inner sealing layer, wherein the oxygen barrier layer is located between the outer layer and inner sealing layer, wherein the oxygen barrier layer comprises an ethylene vinyl ester copolymer (EVOH).

The multilayer film comprises at least 90% per weight polypropylene or polybutene polymers or copolymers, not more than 8% per weight EVOH, and at least 25% per weight random propylene-ethylene copolymer having a melting point in the range from 135 °C to 148 °C, based on the total weight of the film. Further the multilayer film does not comprise any polyamide, polyester, polyvinyl chloride (PVC), or polyvinylidene chloride (PVDC).

In one embodiment the multilayer film comprises at least one intermediate layer between the outer layer and the oxygen barrier layer and/or between the oxygen barrier layer and the inner heat sealing layer.

In a further embodiment the multilayer film comprises the following layer structure: outer layer/intermediate layer 1/barrier layer/intermediate layer 2/inner sealing layer.

In a further embodiment the multilayer film comprises the following layer structure: outer layer/intermediate layer 1/intermediate layer 2/intermediate layer 3/barrier layer/intermediate layer 4/intermediate layer 5/intermediate layer 6/inner sealing layer.

In a further embodiment the multilayer film comprises the following layer structure: outer layer/intermediate layer 1/intermediate layer 2/barrier layer/intermediate layer 3/intermediate layer 4/inner sealing layer.

### OUTER LAYER

The outer layer of the film is the layer that is in contact with the atmosphere.

According to a first embodiment of the invention, the outer layer comprises a homopolymer polypropylene (PP). Preferably, the homopolymer polypropylene has a melting point of at least 150 °C, more preferably the homopolymer polypropylene has a melting point in the range from 150 °C to 170 °C and further preferably a melt flow rate in the range from 0.2 to 20 grams as measured by ASTM D1238 (230 °C, 10 minutes). Preferably, the homopolymer polypropylene is produced by either Ziegler Nata or metallocene catalysts.

According to a second embodiment of the invention, the outer layer comprises a random propylene-ethylene copolymer. Preferably, the random propylene-ethylene copolymer has a melting point in the range from 135 °C to 148 °C and further preferably a melt flow rate in the range from 0.2 to 20 grams as measured by ASTM D1238 (230 °C, 10 minutes).

According to a third embodiment of the invention, the outer layer comprises a propylene ethylene copolymer with less than 10% per weight ethylene and a melting point of less than 130 °C, more preferably less than 125 °C, even more preferably less than 120 °C.

According to a further embodiment of the invention, the outer layer comprises a blend of at least two polymers of the above first, second, or third embodiment.

According to a further embodiment of the invention, the outer layer comprises a blend of polymers of the above first, second, and third embodiment.

### INNER LAYER

In the film according to the present invention, the inner heat sealing layer may comprise a single polypropylene polymer or a blend of different polypropylene polymers.

Preferably the melting point of the polypropylene material in the inner heat sealing layer is at least 10 °C, preferably at least 20 °C lower than the melting point of any polypropylene material used in any other layer of the film.

In a first preferred embodiment the inner heat sealing layer comprises a propylene-ethylene-butene copolymer, preferably the sum of the ethylene and butene content in the propylene-ethylene-butene copolymer is less than 10% by weight based on the total weight of the copolymer.

In a second preferred embodiment the inner heat sealing layer comprises a copolymer of propylene and butene, preferably the melting point of such a copolymer is less than 135 °C, more preferably less than 130 °C.

In a third preferred embodiment the inner heat sealing layer comprises a copolymer of propylene and ethylene, preferably the melting point of such a copolymer is less than 135°C, preferably less than 130 °C, more preferably less than 125 °C, even more preferably less than 120 °C.

According to a further preferred embodiment of the invention, the inner heat sealing layer comprises a blend of at least two polymers of the above first, second, or third embodiment.

In a preferred version of the invention, the sealing layer may be a "peel" layer, e.g. specially designed to offer easy to open effect. In such a case, materials like Borpeel^{™} or Steripeel^{™} from Borealis or special blends of PP and PE are used as known in the art.

### OXYGEN BARRIER LAYER

The multilayer film comprises an oxygen barrier layer comprising EVOH.

The oxygen barrier material is located in an intermediate layer of the film between the outer layer and inner heat sealing layer.

In general, EVOH with an ethylene content of between 48 and 24% per mol is preferred, more preferably 27 to 44% per mol, even more preferably 38 to 44% per mol.

### OTHER INTERMEDIATE LAYERS

Between the sealing layer and the oxygen barrier layer, tie layers can be used. Preferred materials for the tie layer may be maleic anhydride modified PP grades, such as Bynel^{™} 50E109 from Dow or Admer^{™} 541E from Mitsui Chemicals, materials well known in the art.

Other intermediate layers can be used as abuse layers.

According to a preferred embodiment of the invention, intermediate abuse layer comprise a homopolymer polypropylene, having a melting point in the range from 150 °C to 170 °C and a melt flow rate of 0.2 to 20 grams as measured by ASTM D1238 (230 °C, 10 minutes).

According to another preferred embodiment of the invention, the intermediate abuse layer comprises a random propylene-ethylene copolymer having a melting point of 135 °C to 148 °C and a melt flow rate of 0.2 to 20 grams as measured by ASTM D1238 (230 °C, 10 minutes).

According to another preferred version of the invention, the intermediate abuse layer comprises a propylene ethylene copolymer with less than 10% per weight ethylene and preferably a melting point of less than 130 °C, more preferably less than 125 °C, even more preferably less than 120 °C.

### OTHER FILM FEATURES

Any of the layers described above may also include additives well known in the art such as slip agents, antiblock, polymer processing aids, antistatic, antifog, acid scavengers, odour scavengers, nucleating agents, hydrocarbon resins and the like. A person skilled in the art may select the right additives according to any particular needs.

The thickness of the film is preferably in the range 10 to 300 microns, more preferably 20 to 250 microns. The thickness of the outer layer is from 1 to 50 microns, more preferably 3 to 25 microns. The thickness of the inner layer is 5 to 100 microns, more preferably 10 to 60 microns.

In a further aspect of the invention the film or some layers of the film are irradiated.

A preferable method is e-beam or UV radiation or gamma ray. Other methods are also known in the art. Irradiation with use of electron beam is preferred.

For the production of the film of the invention the hot blown film process is suitable, either air cooled or "fast quenched" e.g. cooled by water or other means more efficient in cooling effect than air. Fast quenched process is preferred. Cast process is also suitable.

The multilayer film of the present invention have preferablya haze of less than 10% measured according to ASTM D 1003 and a gloss of at least 100GU (45° angle)measured according to ASTM D2457.

The present invention is now described by the following Examples:

### EXAMPLES

### Example 1

A 9-layer film was produced in a hot blown film line operating with a very efficient fast quench process. The multilayer film comprises the following structure:
Outer layer, 99% PPH1+ 1% slip antiblock masterbatch, thickness 25 microns
Intermediate layer 1, 100% PPR1, thickness 10 microns
Intermediate layer 2, 100% PPR1, thickness 8 microns
Intermediate layer 3, 100% TIE1, thickness 5 microns
Barrier Layer 100% EVOH1, thickness 4 microns
Intermediate layer 4, 100% TIE1, thickness 5 microns
Intermediate layer 5 100% PPPE1, thickness 10 microns
Intermediate layer 6, 100% PPR1, thickness 10 microns
Sealing layer, 70% PPB1 +29% PPPE1+1% slip antiblock masterbatch, thickness 13 microns

### See table 1

Film of example 1 has a weight percentage of random propylene ethylene copolymer of 30.8%, a weight percentage of EVOH of 5.71% and a weight percentage of propylene ethylene of low melting points (less than 130°C) of 15%.

### Example 2

A 9-layer film was produced in a hot blown film line operating with a very efficient fast quench process
Outer layer, 99% PPR1 + 1% slip antiblock masterbatch, thickness 45 microns
Intermediate layer 1, 100% PPR1, thickness 20 microns
Intermediate layer 2, 100% PPR1, thickness 12 microns
Intermediate layer 3, 100% TIE1, thickness 7 microns
Barrier Layer 100% EVOH1, thickness 5,5 microns
Intermediate layer 4, 100% TIE1, thickness 7 microns
Intermediate layer 5, 100% PPPE1, thickness 15 microns
Intermediate layer 6, 100% PPR1, thickness 15 microns
Sealing layer, 70% PPB1 +29% PPPE1 + 1% slip antiblock masterbatch, thickness 25 microns

Film of example 2 has a weight percentage of random propylene ethylene copolymer of 30.8%, a weight percentage of EVOH of 4.7% and a weight percentage of propylene ethylene of low melting points (less than 130 °C) of 14.5%.

**TABLE 1**

| Type | Description | Description | Manufacturer | Melt Index g/10 min (230 °C for all resins) | Density g/cm³ | Melting point ° C. |
|---|---|---|---|---|---|---|
| PPH1 | homopolymer polypropylene with medium molecular weight | TIPPLEN^{®} H 659 F | MOL Petrochemicals Co. LTD | 1.7 | 0.9 | Approx..160 ° C |
| EVOH 1 | 38 mol% Ethylene Vinyl-Alcohol Copolymer | EVAL^{™} H171B | EVAL, Kuraray | 1 | 1.17 | 172 °C |
| PPR1 | Propylene ethylene random copolymer | Polypropyle ne PPR 3221 | TotalEnergies | 1.8 | 0.902 | 142 °C |
| PPPE1 | Propylene ethylene copolymer | | DOW | 2.2 | 0.885 | Less than 120 °C |
| TIE1 | Maleic anhydride modified PP | Bynel^{™} 50E109 | DOW | 3.1 | 0.908 | 125 °C |
| PPB1 | Propylene butene olefin copolymer | | | 5 | 0.895 | 131 °C |

### COMPARATIVE EXAMPLES

A conventional top and a conventional bottom film was produced as per the prior art

### Comparative Example 1

A 9 layer film was produced in a hot blown film line operating with a very efficient fast quench process
Outer layer, 99% PA1+ 1% slip antiblock masterbatch, thickness 25 microns
Intermediate layer 1, 100% TIE2, thickness 10 microns
Intermediate layer 2, 70% PE1 +30% PE2, thickness 8 microns
Intermediate layer 3, Next Layer, 100% TIE1, thickness 5 microns
Barrier Layer 100% EVOH1, thickness 4 microns
Intermediate layer 4, 100% PA1, thickness 5 microns
Intermediate layer 5, 100% TIE2, thickness 10 microns
Intermediate layer 6, 70%PE1 +30% PE2, thickness 10 microns
Sealing layer, 70% PE1 +29%PE2+1% slip antiblock masterbatch, thickness 23 microns

### See table 2

### Comparative Example 2

A 9 layer film was produced in a hot blown film line operating with a very efficient fast quench process
Outer layer, 99% PA1 + 1% slip antiblock masterbatch, thickness 45 microns
Intermediate layer 1, 100% TIE2, thickness 20 microns
Intermediate layer 2, 70%PE1 +30%PE2, thickness 12 microns
Intermediate layer 3, 100% TIE2, thickness 7 microns
Barrier Layer 100% EVOH1, thickness 4 microns
Intermediate layer 4, 100% PA1, thickness 7 microns
Intermediate layer 5, 100% TIE2, thickness 15 microns
Intermediate layer 6, 70% PE1 +30% PE2, thickness 15 microns
Sealing layer, 70% PE1 +29% PE2+ 1% slip antiblock masterbatch, thickness 25 microns

**TABLE 2**

| Type | Description | Description | Manufacturer | Melt Index g/10 min | Density g/cm³ | Melting point ° C. |
|---|---|---|---|---|---|---|
| PA1 | Polyamide 6 grade | Ultramid^{®} B40 LN | BASF | | 01.13 | 218 °C |
| EVOH 1 | 38 mol% Ethylene Vinyl-Alcohol Copolymer | EVAL^{™} H171B | EVAL, Kuraray | 1 | 1.17 | 172 °C |
| TIE 2 | Maleic anhydride grafted, LLDPE-based tie resin | ADMER^{™} NF358E | Mitsui Chemicals | 1.6 | 0.91 | 122 °C |
| PE1 | ETHYLENE HEXENE METALLOCE NE COPOLYME R | Marlex^{®}D1 39 | CHEVRON PHILIPS CHEMICAL | 1 | 0.918 | Approx.. 120 °C |
| PE2 | Low Density Polyethylen e Resin | DOW^{™} LDPE 310E | DOW | 0.7 | 0.923 | 110 °C |
| | | | | | | |

### TESTING-EVALUATION

The following evaluation testing was done on both films of the invention and comparative examples.

### HAZE MEASUREMENT

The haze measurement is done according to ASTM D 1003.

### GLOSS MEASUREMENT

The gloss measurement is done according to ASTM D2457.

### PUNCTURE RESISTANCE

Puncture resistance is measured using a MECMESIN instrument comprising a vertical stand VERSA TEST, a load cell AFG 100N, which is mounted on the stand, and a digital height gauge MITUTOYO SDV 60B. A cylindrical shaft ending to a conical indenter is attached to the load cell. The indenter has an angle of 60o and a tip of 0.5mm in diameter.

The film is conditioned at 23°C and about 50%RH for at least 24 hours prior to the measurement. Square samples of 8.5cmx8.5cm are prepared and clamped on a 5cm diameter circular base. The indenter moves perpendicular to the film and force is measured as the indenter comes into contact with and ruptures the film. The speed of the indenter is set to 25mm/min. Maximum force needed to puncture the film is recorded. The puncture force of a material is determined by averaging the values obtained for at least 5 samples of the material tested.

### THERMOFORMABILITY TEST

The test was done on a thermoforming VC999 machine.

The films of example 1 and comparative example 1 were used as top films, having films of example 2 and comparative example 2 as bottom films respectively.

Features that were examined were thickness uniformity of the thermoformed pockets, ability to thermoform in a quite broad processing window and ability to have enough heat resistance to allow efficient sealing in the sealing station without "burn" of the tow film.

The combination of top example 1 and bottom example 2 was equally good to the comparative films combination and all were characterized as A.
A= Good thermoformability
B=Medium thermoformability
C=Bad thermoformability

**TABLE 3**

| | HA ZE | GLOSS | PERFORMANCE IN THERMOFORMER evaluation | PUNCTURE RESISTANCE |
|---|---|---|---|---|
| Example 1 | 6 | 120 | A | 22 Newtons |
| Example 2 | 9 | 112 | A | 37 Newtons |
| Comparative Example 1 | 6.7 | 110 | A | 24 Newtons |
| Comparative Example 2 | 9.2 | 120 | A | 35 Newtons |

## Claims

1. A multilayer film comprising an outer layer, an oxygen barrier layer, and an inner sealing layer, wherein the oxygen barrier layer is located between the outer layer and inner sealing layer, wherein the oxygen barrier layer comprises an ethylene vinyl ester copolymer (EVOH), and wherein the multilayer film comprises
at least 90% per weight polypropylene or polybutene polymers or copolymers,
not more than 8% per weight EVOH, and
at least 25% per weight random propylene-ethylene copolymer having a melting point in the range from 135 °C to 148 °C, based on the total weight of the multilayer film, and wherein
the multilayer film does not comprise any polyamide, polyester, polyvinyl chloride (PVC), or polyvinylidene chloride (PVDC).

2. The multilayer film according to claim 1, wherein the multilayer film comprises a homopolymer polypropylene, preferably wherein the multilayer film comprises a homopolymer polypropylene in the outer layer.

3. The multilayer film according to claim 2, wherein the homopolymer polypropylene is a homopolymer polypropylene produced by either Ziegler-Natta- or metallocene catalysts and having a melting point of at least 150 °C, more preferably the homopolymer polypropylene has a melting point in the range from 150 °C to 170 °C and further preferably a melt flow rate in the range from 0.2 to 20 grams as measured by ASTM D1238 (230 °C, 10 minutes).

4. The multilayer film according to any one of the preceding claims, wherein the multilayer film comprises, in the outer layer a random propylene-ethylene copolymer, preferably, the random propylene-ethylene copolymer has a melting point in the range from 135 °C to 148 °C and further preferably a melt flow rate in the range from 0.2 to 20 grams as measured by ASTM D1238 (230 °C, 10 minutes).

5. The multilayer film according to any one of the preceding claims, wherein the multilayer film comprises, in the outer layer a propylene ethylene copolymer with less than 10% per weight ethylene and a melting point of less than 130 °C, more preferably less than 125 °C, even more preferably less than 120 °C.

6. The multilayer film according to any of the preceding claims, wherein the multilayer film comprises at least one polypropylene polymer, preferably a blend of different polypropylene polymers, in the inner heat sealing layer, preferably the melting point of the polypropylene material in the inner heat sealing layer is at least 10 °C lower than the melting point of any polypropylene material used in any other layer of the multilayer film.

7. The multilayer film according to claim 6, wherein the multilayer film comprises a propylene ethylene copolymer in the inner heat sealing layer, preferably the propylene ethylene copolymer has a melting point of less than 135°C, preferably less than 130 °C, more preferably a melting point of less than 125 °C, even more preferably a melting point of less than 120 °C.

8. The multilayer film according to claim 6 or 7, wherein the multilayer film comprises at least 10% of the propylene ethylene copolymer, based on the total weight of the multilayer film.

9. The multilayer film according to any of the preceding claims, wherein the inner sealing layer (further) comprises a propylene butene copolymer, preferably said copolymer has a melting point of less than 135 °C, preferably less than 130 °C, more preferably a melting point of less than 125 °C, even more preferably a melting point of less than 120 °C.

10. The multilayer film according to any of the preceding claims, wherein the inner sealing layer (further) comprises a propylene-ethylene-butene copolymer, preferably the sum of the ethylene and butene content in the propylene-ethylene-butene copolymer is less than 10% by weight based on the total weight of the copolymer.

11. The multilayer film according to any one of the preceding claims, comprising at least one intermediate layer between the outer layer and the oxygen barrier layer and/or between the oxygen barrier layer and the inner heat sealing layer, preferably the multilayer film comprises the following layer structure: outer layer/intermediate layer 1/barrier layer/intermediate layer 2/inner sealing layer.

12. The multilayer film according to any one of claims 1 to 10, comprising the following layer structure: outer layer/intermediate layer 1/intermediate layer 2/intermediate layer 3/barrier layer/intermediate layer 4/intermediate layer 5/intermediate layer 6/inner sealing layer, or the following layer structure: outer layer/intermediate layer 1/intermediate layer 2/barrier layer/intermediate layer 3/intermediate layer 4/inner sealing layer.

13. The multilayer film according to any of the preceding claims, wherein the multilayer film as a haze of less than 10% measured according to ASTM D 1003.

14. The multilayer film according to any of the preceding claims, wherein the multilayer film has a gloss of at least 100GU (45° angle) measured according to ASTM D2457.

15. Use of the multilayer film according to any of the preceding claims for packaging applications, in particular for packaging food.

16. Use of the multilayer film according to anyone of claim 1 to 14, as top film and/or bottom film in deep-drawing packaging.

17. A deep-drawing package comprising as a top film and/or as a bottom film a multilayer film according to any one of claims 1 to 14.
